(19) Europäisches Patentamt / European Patent Office / Office européen des brevets

(11) **EP 2 456 135 A1**

(12) **DEMANDE DE BREVET EUROPEEN**

(43) Date de publication:
**23.05.2012 Bulletin 2012/21**

(51) Int Cl.:
***H04L 12/56*** *(2006.01)*

(21) Numéro de dépôt: **10306267.5**

(22) Date de dépôt: **17.11.2010**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Thomson Licensing**
**92130 Issy-les-Moulineaux (FR)**

(72) Inventeurs:
• **Bichot, Guillaume**
**35576, Cesson Sevigne cedex (FR)**
• **Gouache, Stephane**
**35576, Cesson Sevigne cedex (FR)**

(74) Mandataire: **Ruellan-Lemonnier, Brigitte**
**Technicolor**
**European Patent Operations**
**1-5 Rue Jeanne d'Arc**
**92443 Issy-les-Moulineaux Cedex (FR)**

(54) **Procédé et dispositif de détermination de chemin(s) de communication entre des équipements de communication à interfaces de communication multiples**

(57) Un procédé est dédié à la détermination de chemin(s) de communication pour des paquets d'une session de communication exploitant au moins deux chemins de communication établis entre deux équipements de communication (E1, E2), l'un de ces équipements (E1) ayant au moins deux interfaces de communication $(I_{11}, I_{12})$ disposant d'adresses de communication différentes, et l'autre (E2) ayant au moins une interface de communication $(I_{21})$ disposant d'une adresse de communication. Ce procédé comprend une étape (a) consistant à sélectionner l'une des interfaces de communication $(I_{11})$ d'un premier équipement de communication (E1) en fonction de niveaux de priorité d'utilisation qui leurs sont associés, et une étape (b) consistant à sélectionner, pour transmettre des paquets de la session de communication, au moins l'un des chemins de communication existants entre l'une des interfaces de communication $(I_{21})$ du second équipement de communication (E2) et l'interface de communication $(I_{11})$ sélectionnée pour le premier équipement de communication (E1), en fonction d'une bande passante maximale autorisée en réception pour cette dernière interface $(I_{11})$ et de temps de transmission de paquets sur les chemins de communication existants.

Figure unique

**Description**

Domaine technique de l'invention

L'invention concerne les équipements de communication capables de participer à des sessions de communication de type dit "à chemins de communication multiples" (ou "multipath") du fait qu'ils possèdent une ou plusieurs interfaces de communication disposant d'adresses de communication différentes et propres à se connecter à des réseaux d'accès différents.

On entend ici par "chemin de communication" un trajet reliant deux équipements de communication au travers de deux interfaces de communication (une par équipement) définies chacune par une adresse de communication (par exemple une adresse IP). Un chemin de communication est donc identifié par la paire d'adresses de communication de deux interfaces de communication.

Par ailleurs, on entend ici par "équipement de communication" tout type d'équipement comprenant au moins une interface de communication, et de préférence plusieurs, filaire ou non filaire, et capable d'échanger des paquets de données avec un autre équipement de communication, éventuellement d'un type différent. Par conséquent, il pourra par exemple s'agir d'un téléphone fixe ou mobile, éventuellement de type intelligent (ou "smartphone"), d'un ordinateur fixe ou portable, d'un assistant personnel numérique (ou PDA, y compris un "pocket PC"), d'un récepteur de contenus (comme par exemple un décodeur, une passerelle résidentielle (ou "residential gateway") ou un STB ("Set-Top Box")), ou d'un équipement de réseau (comme par exemple un serveur de contenus).

Etat de l'art

Comme le sait l'homme de l'art, lorsqu'un équipement (de communication) communique dans un mode dit à chemins de communication multiples (ou multipath ou encore multi-chemins) avec un autre équipement, il doit mettre en oeuvre une stratégie de transmission de paquets afin de sélectionner un ou plusieurs chemins de communication en fonction des besoins de l'application concernée (et notamment du type de données qu'elle utilise ou produit) et des caractéristiques et statuts respectifs des chemins de communication qui existent entre lui et cet autre équipement. Ces caractéristiques et statuts doivent être compatibles avec les états en cours des différents réseaux d'accès qui sont empruntés par les chemins de communication, et sont mis à jour régulièrement grâce à des mesures.

A titre d'exemple non limitatif, lorsque la session de communication concerne une application de distribution de vidéo, chaque chemin de communication peut être caractérisé par des paramètres tels que la bande passante (ou "bandwidth" - parfois appelée "débit binaire" - en fait il s'agit d'appellations équivalentes ayant une même unité, à savoir un nombre de bits par unité de temps), la gigue paquet, le temps de transmission des paquets (ou "delay"). Ces paramètres peuvent être mesurés (ou estimés) grâce à diverses techniques dites de bout-en-bout (ou "end-to-end") qui ne sont généralement pas triviales du fait qu'elles se doivent d'être non intrusives (c'est-à-dire non perturbatrices). Par exemple, lorsque le protocole de transport est de type TCP ("Transmission Control Protocol") ou SCTP ("Stream Control Transmission Protocol" - défini notamment dans les règles RFC 4960 et 5061 de l'IETF), on peut utiliser un algorithme de type Westwood pour maximiser l'efficacité d'exploitation de la bande passante en mesurant de façon continue la bande passante disponible sur un chemin de communication grâce aux accusés de réception dupliqués des paquets transmis et aux intervalles de temps d'arrivée des paquets.

Cependant, même si la stratégie de transmission de paquets utilise des valeurs de paramètres assez précis, elle ne prend pas en compte certaines informations locales, connues des équipements (points intermédiaires ou points finaux) participants à une session de communication, qui pourraient permettre de piloter le choix d'un chemin de communication. Parmi ces informations locales, on peut notamment citer le coût d'utilisation d'une interface lié au coût d'utilisation de son réseau d'accès, la possibilité de contrôler la qualité de service (ou QoS) sur une interface de communication, et la consommation d'énergie pour une bande passante donnée (elle peut varier d'une interface de communication à l'autre en fonction du lieu considéré et/ou de l'horaire).

Résumé de l'invention

L'invention a donc pour but d'améliorer la situation, et plus précisément de permettre une stratégie de transmission de paquets prenant en compte certaines informations locales connues des équipements (points intermédiaires ou points finaux) qui participent à des sessions de communication.

A cet effet, l'invention propose notamment un premier procédé, dédié à la transmission d'informations entre deux équipements de communication dans le cadre d'une session de communication exploitant au moins deux chemins de communication, l'un de ces équipements ayant au moins deux interfaces de communication disposant d'adresses de communication différentes, et l'autre ayant au moins une interface de communication disposant d'une adresse de communication, et comprenant :

- une étape (i) consistant à générer dans l'un au moins des équipements de communication un message de contrôle qui contient chaque adresse de communication de chacune de ses interfaces de communication associée à des première et seconde informations représentatives respectivement d'un niveau de priorité d'utilisation et d'une bande passante maximale autorisée en réception ($K_{ji}$ - l'indice i désigne une interface et l'indice j désigne un équipement), et

- une étape (ii) consistant à transmettre le message de contrôle à l'autre équipement de communication afin qu'il détermine au moins un chemin de communication pour transmettre des paquets de la session de communication entre l'une de ses interfaces de communication et l'une des interfaces de communication de l'équipement de communication qui a transmis le message de contrôle.

On entend ici par "bande passante maximale autorisée", la bande passante maximale qu'un équipement accepte de recevoir sur une interface donnée.

Par exemple, chaque message de contrôle peut être conforme au protocole de transport SCTP ("Stream Control Transmission Protocol").

L'invention propose également un second procédé, dédié à la détermination de chemin(s) de communication pour des paquets d'une session de communication exploitant au moins deux chemins de communication établis entre deux équipements de communication, l'un de ces équipements ayant au moins deux interfaces de communication disposant d'adresses de communication différentes, et l'autre ayant au moins une interface de communication disposant d'une adresse de communication, et comprenant:

- une étape (a) consistant à sélectionner l'une des interfaces de communication d'un premier équipement de communication en fonction de niveaux de priorité d'utilisation qui leur sont associés, et
- une étape (b) consistant à sélectionner, pour transmettre des paquets de la session de communication, au moins l'un des chemins de communication existants entre l'une des interfaces de communication du second équipement de communication et l'interface de communication sélectionnée pour le premier équipement de communication, en fonction d'une bande passante maximale autorisée en réception ($K_{ji}$) pour cette dernière interface et de temps de transmission de paquets sur les chemins de communication existants.

Le second procédé selon l'invention peut comporter d'autres caractéristiques qui peuvent être prises séparément ou en combinaison, et notamment :

- à l'étape (a) on peut effectuer la sélection parmi les interfaces de communication du premier équipement de communication qui sont associées à une bande passante maximale autorisée en réception ($K_{ji}$) qui est supérieure à la bande passante des paquets à transmettre de la session de communication;
- lorsque la bande passante utilisable sur le chemin de communication sélectionné est strictement inférieure à la bande passante maximale autorisée en réception pour l'interface de communication sélectionnée du premier équipement de communication, on peut sélectionner au moins un autre des chemins de communication existants entre une interface de communication du second équipement de communication et l'interface de communication sélectionnée du premier équipement de communication, en fonction des temps qu'il faut pour transmettre des paquets sur les chemins de communication existants, de sorte que des paquets de la session de communication soient transmis de façon répartie sur chaque chemin de communication sélectionné;

- chaque temps $R_m$ de transmission de paquets sur un chemin de communication existant peut, à titre d'exemple purement illustratif, être déterminé en fonction de l'équation suivante: $R_m = (O_m + D) / \min(B_m, k_m)$, où $O_m$ est le nombre de paquets qui sont en cours de transmission sur le chemin de communication existant considéré, D est le nombre de paquets devant être transmis, $B_m$ est une estimée de la capacité de transmission en cours sur le chemin de communication existant considéré, et $k_m$ est une bande passante maximale autorisée en réception dans l'interface de communication sélectionnée du premier équipement de communication pour le chemin de communication existant considéré;

- en variante, chaque temps $R_m$ de transmission de paquets sur un chemin de communication existant peut, à titre d'exemple purement illustratif, être déterminé en fonction de l'équation suivante: $R_m = \min RTT_m/2 + (O_m + S_m + D) / \min(B_m, k_m)$, où $\min RTT_m$ est le plus petit temps aller/retour observé sur le chemin de communication existant considéré, $O_m$ est le nombre de paquets qui sont en cours de transmission sur le chemin de communication existant considéré, $S_m$ est le nombre de paquets en attente de transmission sur le chemin de communication existant considéré, D est le nombre de paquets devant être transmis, $B_m$ est une estimée de la capacité de transmission en cours sur le chemin de communication existant considéré, et $k_m$ est une bande passante maximale autorisée en réception dans l'interface de communication sélectionnée du premier équipement de communication pour le chemin de communication existant considéré;

- chaque paramètre $k_m$ peut, par exemple et non limitativement, être donné par la formule équiprobable suivante : $k_m = K_{ji} / N_{ji}$, où $N_{ji}$ est le nombre de chemins de communication existants arrivant dans l'interface de communication sélectionnée du premier équipement de communication;

- lorsque chaque équipement de communication met en oeuvre un algorithme de gestion de flux de paquets au niveau de chacune de ses interfaces de communication, on peut sélectionner à l'étape (b), dans le second équipement de communication, au moins l'un des chemins de communication existants entre l'une de ses interfaces de communication, capables, à l'instant considéré, d'offrir une bande passante utilisable en émission supérieure à la bande passante des paquets à transmettre de la session de communication, et l'interface de communication sélectionnée du premier équipement de communication;

- en variante, lorsque chaque équipement de communication met en oeuvre un algorithme de gestion de flux de paquets au niveau de chacune de ses interfaces de communication, on peut sélectionner à l'étape (b), dans le second équipement de communication, au moins l'un des chemins de communication existants entre l'une de ses interfaces de communication, capables, à l'instant considéré, d'une part, d'offrir une bande passante utilisable en émission qui est égale à la bande passante des paquets à transmettre de la session de communication moins une bande passante excédentaire, et, d'autre part, de transmettre les paquets correspondant à cette bande passante excédentaire dans un délai qui est inférieur à un seuil choisi, et l'interface de communication sélectionnée du premier équipement de communication.

L'invention propose également un premier dispositif dédié à la génération de messages de contrôle pour une session de communication exploitant au moins deux chemins de communication établis entre deux équipements de communication, l'un de ces équipements ayant au moins deux interfaces de communication disposant d'adresses de communication différentes, et l'autre ayant au moins une interface de communication disposant d'une adresse de communication. Ce premier dispositif se caractérise par le fait qu'il est agencé pour générer pour l'un des équipements de communication un message de contrôle qui contient chaque adresse de communication de chacune de ses interfaces de communication associée à des première et seconde informations représentatives respectivement d'un niveau de priorité d'utilisation et d'une bande passante maximale autorisée en réception.

Par ailleurs, ce premier dispositif peut être agencé pour générer des messages de contrôle conformes au protocole de transport SCTP.

L'invention propose également un second dispositif, dédié à la détermination de chemin(s) de communication pour des paquets d'une session de communication exploitant au moins deux chemins de communication établis entre deux équipements de communication, l'un de ces équipements ayant au moins deux interfaces de communication disposant d'adresses de communication différentes, et l'autre ayant au moins une interface de communication disposant d'une adresse de communication.

Ce second dispositif se caractérise par le fait qu'il comprend:

- des premiers moyens de sélection agencés pour sélectionner l'une des interfaces de communication d'un premier équipement de communication en fonction de niveaux de priorité d'utilisation qui leur sont associés, et

- des seconds moyens de sélection agencés pour sélectionner, en vue de la transmission de paquets de la session de communication, au moins l'un des chemins de communication existants entre l'une des interfaces de communication d'un second équipement de communication et l'interface de communication sélectionnée pour le premier équipement de communication, en fonction d'une bande passante maximale autorisée en réception ($K_{j'i}$) pour cette dernière interface et de temps de transmission de paquets sur les chemins de communication existants.

L'invention propose également un équipement de communication comprenant, d'une part, au moins une interface de communication disposant d'une adresse de communication, et, d'autre part, un dispositif de génération de messages du type de celui présenté ci-avant et/ou un dispositif de détermination de chemin(s) de communication du type de celui présenté ci-avant.

Brève description des dessins

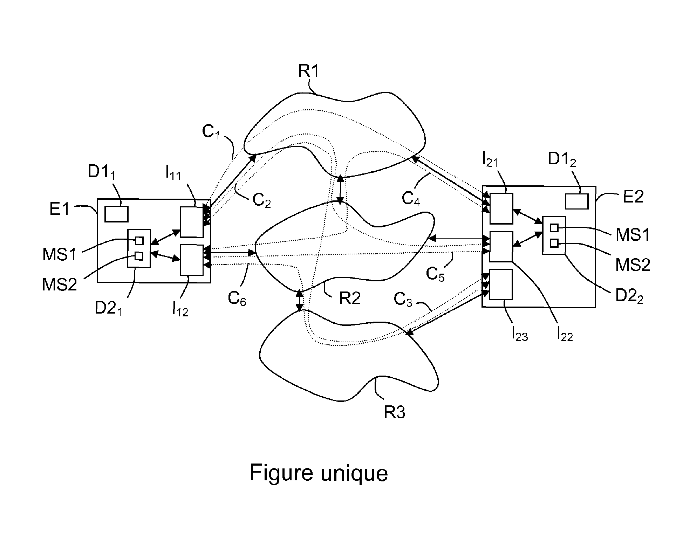

D'autres caractéristiques et avantages de l'invention apparaîtront à l'examen de la description détaillée ci-après, et du dessin annexé, sur lequel l'unique figure illustre de façon schématique et fonctionnelle deux équipements de communication équipés chacun d'un dispositif de génération de messages de contrôle selon l'invention, d'un dispositif de détermination de chemin(s) de communication selon l'invention et d'interfaces de communication propres à se connecter respectivement à des réseaux d'accès différents couplés entre eux.

Le dessin annexé pourra non seulement servir à compléter l'invention, mais aussi contribuer à sa définition, le cas échéant.

Description détaillée

L'invention a pour objet de permettre la prise en compte de certaines informations locales, connues des équipements de communication (points intermédiaires ou points finaux) Ej qui participent à des sessions de communication en mode multi-chemins, lors de la sélection des chemins de communication.

Dans ce qui suit, on considère à titre d'exemple non limitatif que les équipements de communication Ej sont des téléphones mobiles, des passerelles résidentielles ou des serveurs de contenus. Mais, l'invention n'est pas limitée à ces types d'équipement de communication. Elle concerne en effet tout type d'équipement Ej comprenant au moins une interface de communication $I_{ji}$, et de préférence plusieurs, filaire ou non filaire, et capable d'échanger des paquets de données avec un autre équipement de communication Ej' (j' ≠ j), éventuellement d'un type différent. Par conséquent, il pourra également s'agir, par exemple, d'un téléphone fixe, d'un ordinateur fixe ou portable, d'un assistant personnel numérique (ou PDA, y compris un pocket PC), d'un récepteur de contenus (comme par exemple un décodeur, une passerelle résidentielle ou un STB (Set-Top Box)), ou d'un autre équipement de réseau impliqué dans la transmission de paquets de données.

On a schématiquement illustré sur l'unique figure un exemple non limitatif de couplage multi-chemins entre deux équipements (de communication) $E_j$ ($j = 1$ ou 2).

Le premier équipement E1 ($j = 1$) comprend, dans cet exemple non limitatif, deux interfaces de communication $I_{1i}$. La première interface de communication $I_{11}$ ($i = 1$) est capable de se connecter à un premier réseau d'accès R1, par exemple de type WiFi. La seconde interface de communication $I_{12}$ ($i = 2$) est capable de se connecter à un deuxième réseau d'accès R2, par exemple de type 3G+, et couplé au premier réseau d'accès R1 et à un troisième réseau d'accès R3, par exemple de type WiFi. Ce premier équipement E1 est par exemple un téléphone mobile.

Le second équipement E2 ($j = 2$) comprend, dans cet exemple non limitatif, trois interfaces de communication $I_{2i}$. La première interface de communication $I_{21}$ ($i = 1$) est capable de se connecter au premier réseau d'accès R1. La deuxième interface de communication $I_{22}$ ($i = 2$) est capable de se connecter au deuxième réseau d'accès R2. La troisième interface de communication $I_{32}$ ($i = 3$) est capable de se connecter au troisième réseau d'accès R3. Ce second équipement E2 est par exemple un serveur de contenus (comme par exemple des vidéos).

On notera que les réseaux d'accès R1 à R3 peuvent être éventuellement reliés les uns aux autres par des réseaux intermédiaires. La combinaison de réseaux d'accès illustrée n'est en effet qu'un exemple non limitatif parmi de nombreux autres.

Par ailleurs, dans l'exemple non limitatif illustré, un premier chemin de communication de paquets $C_1$ ($m = 1$) peut être établi entre les premières interfaces (de communication) $I_{11}$ et $I_{21}$ via le premier réseau d'accès R1, un deuxième chemin de communication de paquets $C_2$ ($m = 2$) peut être établi entre la première interface $I_{11}$ du premier équipement E1 et la deuxième interface $I_{22}$ du second équipement E2 via les premier R1 et deuxième R2 réseaux d'accès, un troisième chemin de communication de paquets $C_3$ ($m = 3$) peut être établi entre la première interface $I_{11}$ du premier équipement E1 et la troisième interface $I_{23}$ du second équipement E2 via les premier R1, deuxième R2 et troisième R3 réseaux d'accès, un quatrième chemin de communication de paquets $C_4$ ($m = 4$) peut être établi entre la deuxième interface $I_{12}$ du premier équipement E1 et la première interface $I_{21}$ du second équipement E2 via les deuxième R2 et premier R1 réseaux d'accès, un cinquième chemin de communication de paquets $C_5$ ($m = 5$) peut être établi entre les secondes interface $I_{12}$ et $I_{22}$ des premier E1 et second E2 équipements via le deuxième réseau d'accès R2, et un sixième chemin de communication de paquets $C_6$ ($m = 6$) peut être établi entre la seconde interface $I_{12}$ du premier équipement E1 et la troisième interface $I_{23}$ du second équipement E2 via les deuxième R2 et troisième R3 réseaux d'accès.

Afin que les équipements $E_j$ puissent connaître certaines informations locales des équipements $E_{j'}$ avec lesquels ils veulent établir ou ont établis des sessions de communication, l'invention propose de mettre en oeuvre un premier procédé de transmission d'informations entre équipements $E_j$.

Ce premier procédé comprend deux étapes (i) et (ii).

Une première étape (i) consiste à générer dans l'un au moins des équipements $E_j$ un message de contrôle qui contient chaque adresse de communication de chacune de ses interfaces (de communication) $I_{ji}$, associée à des première et seconde informations qui sont représentatives respectivement d'un niveau de priorité d'utilisation et d'une bande passante maximale autorisée en réception $K_{ji}$.

On entend ici par "bande passante maximale autorisée", la bande passante maximale qu'un équipement accepte de recevoir sur une interface donnée.

Le niveau de priorité d'utilisation est relatif au sein d'un équipement donné $E_j$. Par exemple plus la valeur du niveau est petite plus l'interface $I_{ji}$ correspondante doit être utilisée de façon prioritaire. On considère dans ce qui suit qu'une interface $I_{ji}$ ayant un niveau de priorité d'utilisation de valeur égale à un (1) est plus prioritaire qu'une interface $I_{ji'}$ ($i' \neq i$) ayant un niveau de priorité d'utilisation de valeur égale à deux (2), laquelle est elle-même plus prioritaire qu'une interface $I_{ji''}$ ($i'' \neq i'$) ayant un niveau de priorité d'utilisation de valeur égale à trois (3).

La bande passante maximale (ou débit binaire maximal) autorisé(e) en réception $K_{ji}$ au niveau d'une interface $I_{ji}$ d'un équipement donné $E_j$ peut être considérée comme la somme des bandes passantes maximales autorisées en réception $k_m$ au niveau de cette interface $I_{ji}$ pour les différents chemins de communication $C_m$ qui aboutissent dans cette dernière ($I_{ji}$), pour la session de communication considérée (soit $K_{ji} = \sum_{m(j,i)} k_m$). Par exemple, dans l'exemple illustré $K_{11} = k_1 + k_2 + k_3 + k_4$, et $K_{12} = k_5$.

Il est important de noter que le niveau de priorité d'utilisation et/ou la bande passante maximale autorisée en réception $K_{ji}$ au niveau d'une interface $I_{ji}$ d'un équipement donné $E_j$ peuvent/peut éventuellement varier en fonction du jour et/ou de l'horaire et/ou du lieu. Par ailleurs, un équipement $E_j$ peut changer à tout moment l'indication de bande passante maximale autorisée en réception ($K_{ji}$) (et/ou l'indication de la bande passante moyenne) associée à une interface locale $I_{ji}$, du fait, par exemple, d'une estimation de trafic montant plus important (dans le cas où il n'y a pas de séparation entre les trafics montant et descendant), ou bien du démarrage d'une nouvelle application nécessitant de réserver une partie de la bande passante descendante.

Par exemple, chaque message de contrôle peut être conforme au protocole de transport SCTP (Stream Control Transmission Protocol). Mais, tout autre protocole de transport capable de supporter la multi-domiciliation (ou "multihoming"), et donc les multi-chemins, peut être utilisé. Par exemple, on peut modifier les messages de type INIT et ASCONF du protocole SCTP pour leur adjoindre les informations locales (niveau de priorité d'utilisation et bande passante maximale autorisée en réception $K_{ji}$) relatives à chaque interface $I_{ji}$. Ainsi, dans le cas d'adresses de communication de type IPv4, on peut changer la valeur du champ de taille ("length") pour la faire passer de 8 bits à 12 bits, puis adjoindre au champ dédié à la définition d'une adresse IPv4 (32 bits) un premier champ dédié à la définition du niveau de priorité d'utilisation (4 bits) et un second champ dédié à la définition de $K_{ji}$ (28 bits). Dans le cas d'adresses de communication de type IPv6, on peut conserver la valeur du champ de taille ("length" - égale à 20 bits) et adjoindre au champ dédié à la définition d'une adresse IPv6 (128 bits) un premier champ dédié à la définition du niveau de priorité d'utilisation (4 bits) et un second champ dédié à la définition de $K_{ji}$ (28 bits).

On notera que cette première étape (i) peut être mise en oeuvre au moyen de premiers dispositifs (de génération de messages de contrôle) $D1_j$ qui sont associés respectivement aux équipements $Ej$.

On entend ici par "associé" aussi bien le fait de faire partie intégrante d'un équipement $Ej$ (comme illustré), que le fait d'être couplé directement ou indirectement à un équipement $Ej$. Par conséquent, un premier dispositif (de génération de messages de contrôle) $D1_j$ peut être réalisé sous la forme de modules logiciels (ou informatiques), ou bien de circuits électroniques, ou encore d'une combinaison de circuits électroniques et de modules logiciels.

Une seconde étape (ii) du premier procédé consiste à transmettre un message de contrôle, qui a été généré par un premier équipement (par exemple E1), à un second équipement (par exemple E2), afin qu'il détermine au moins un chemin de communication $C_m$ pour transmettre des paquets de la session de communication considéré entre l'une de ses interfaces de communication $I_{2i}$ et l'une des interfaces de communication $I_{1i}$ du premier équipement E1 (qui a transmis le message de contrôle).

Afin de pouvoir utiliser les informations locales qui sont contenues dans les messages de contrôle décrits ci-avant, l'invention propose de mettre en oeuvre un second procédé dédié à la détermination de chemin(s) de communication de paquets d'une session de communication entre deux équipements $Ej$.

Ce second procédé comprend deux étapes (a) et (b).

Une première étape (a) consiste à sélectionner l'une des interfaces $I_{j'i}$ d'un premier équipement $Ej'$ (par exemple E1 - j' = 1) en fonction des niveaux de priorité d'utilisation qui sont associés à ces interfaces $I_{j'i}$.

A cet effet, on peut par exemple commencer par constituer une liste dans laquelle les interfaces $I_{j'i}$ sont classées en fonction de leurs niveaux de priorité d'utilisation respectifs selon un ordre décroissant.

Puis, on peut, par exemple, effectuer la sélection d'une interface parmi les interfaces de communication $I_{j'i}$ (ici $I_{1i}$) du premier équipement E1 qui sont associées à une bande passante maximale autorisée en réception $K_{1i}$ (fournie dans un message de contrôle précédemment reçu) qui est supérieure à la bande passante des paquets de la session de communication considérée, qui doivent être transmis par le second équipement E2 au premier équipement E1.

Une seconde étape (b) du second procédé consiste à sélectionner, en vue de permettre la transmission de paquets de la session de communication, au moins l'un des chemins de communication $C_m$ qui existent entre l'une des interfaces de communication $I_{ji}$ (ici $I_{2i}$) du second équipement $Ej$ (ici E2) et l'interface de communication $I_{j'i}$ (ici $I_{1i}$) du premier équipement $Ej'$ (ici E1) qui a été sélectionnée lors de la première étape (a). Cette sélection se fait en fonction de la bande passante maximale autorisée en réception $K_{1i}$ pour l'interface sélectionnée en (a) $I_{1i}$ et de temps $R_m$ qu'il faut pour transmettre des paquets sur les chemins de communication $C_m$ qui existent entre les premier E1 et second E2 équipements.

Par exemple, on peut sélectionner lors de la première étape (a) la première interface $I_{11}$ du premier équipement E1, puis sélectionner lors de la seconde étape (b) la deuxième interface $I_{22}$ du second équipement E2 qui est couplée à cette première interface $I_{11}$ via le deuxième chemin de communication $C_2$ qui passe par les premier R1 et deuxième R2 réseaux d'accès, du fait que c'est celui qui permet de transmettre le plus rapidement les paquets de E2 vers E1 à l'instant considéré, parmi les six chemins de communication possibles $C_1$ à $C_6$.

On notera que, lorsque la bande passante $B_m$, qui est utilisable sur le chemin de communication sélectionné $C_m$ (par exemple $C_2$), est strictement inférieure à la bande passante maximale autorisée en réception $K_{1i}$ (par exemple $K_{11}$) pour l'interface $I_{1i}$ (par exemple $I_{11}$), sélectionnée pour le premier équipement E1, on peut sélectionner au moins un autre des chemins de communication $C_m$ ($m \neq 2$, par exemple m = 1, 3 ou 4) qui existent entre une interface $I_{2i'}$ du second équipement E2 et l'interface $I_{11}$ qui a été sélectionnée pour le premier équipement E1. Cette sélection se fait en fonction des temps $R_m$ de transmission des paquets sur les chemins de communication $C_m$ (m # 2) qui existent entre l'interface $I_{2i'}$, nouvellement sélectionnée, et l'interface $I_{11}$ (sélectionnée lors de la première étape (a)). Les paquets de la session de communication sont alors transmis du second équipement E2 vers le premier équipement E1, de façon répartie sur le chemin de communication initialement sé-

lectionné $C_2$ et sur le chemin de communication nouvellement sélectionné $C_m$ ($m \neq 2$, par exemple $m = 1$).

Lorsque l'on utilise le protocole SCTP pour effectuer des mesures de paramètres, chaque temps $R_m$ de transmission de paquets sur un chemin de communication existant $C_m$ peut être déterminé au moyen de l'une ou l'autre des deux équations présentées ci-après à titre d'exemples purement illustratifs.

Une première équation [$R_m = (O_m + D) / \min(B_m,k_m)$] peut, par exemple, être utilisée avec l'algorithme SCTP de type Westwood (W-SCTP). Dans cette première équation $O_m$ représente le nombre de paquets qui sont en cours de transmission sur le chemin de communication existant $C_m$ considéré (de E2 vers E1), D représente le nombre de paquets devant être transmis du second équipement E2 vers le premier équipement E1, $B_m$ représente l'estimée de la capacité de transmission en cours (ou bande passante utilisable) sur le chemin de communication existant $C_m$ considéré, et $k_m$ représente la bande passante maximale autorisée en réception dans l'interface de communication $I_{j'i}$ (qui a été sélectionnée lors de la première étape (a) pour le premier équipement E1) pour le chemin de communication existant $C_m$ considéré.

Une seconde équation [$R_m = \min RTT_m/2 + (O_m + S_m + D) / \min(B_m,k_m)$] peut, par exemple, être utilisée avec l'algorithme SCTP de type Westwood à fiabilité partielle (W-SCTP-PR - ("Partial Reliability")). Dans cette seconde équation $\min RTT_m$ est le plus petit temps aller/retour observé sur le chemin de communication existant $C_m$ considéré, $O_m$ représente toujours le nombre de paquets qui sont en cours de transmission sur le chemin de communication existant $C_m$ considéré (de E2 vers E1), $S_m$ représente le nombre de paquets en attente de transmission sur le chemin de communication existant $C_m$ considéré (de E2 vers E1), D représente toujours le nombre de paquets devant être transmis du second équipement E2 vers le premier équipement E1, $B_m$ représente toujours l'estimée de la capacité de transmission en cours (ou bande passante utilisable) sur le chemin de communication existant $C_m$ considéré, et $k_m$ représente toujours la bande passante maximale autorisée en réception dans l'interface de communication $I_{j'j}$ (qui a été sélectionnée lors de la première étape (a) pour le premier équipement E1) pour le chemin de communication existant $C_m$ considéré.

On notera que dans les deux équations présentées ci-avant (à titre d'exemples), le paramètre $k_m$ est inconnu. Il peut par exemple et non limitativement être déterminé au moyen de la formule équiprobable suivante : $k_m = K_{j'i} / N_{j'i}$. Dans cette formule (équiprobable) $N_{j'i}$ représente le nombre de chemins de communication existants $C_m$ qui arrivent dans l'interface $I_{j'i}$ qui a été sélectionnée lors de la première étape (a) pour le premier équipement Ej' (ici E1). Dans l'exemple illustré, le nombre de chemins de communication existants $C_m$ ($m = 1$ à 4) qui arrivent dans la première interface $I_{11}$ du

premier équipement E1 est égal à quatre (soit $N_{11} = 4$), et par conséquent le paramètre $k_m$ est égal à $K_{11}/4$. Mais, d'autres formules plus complexes et non équiprobables peuvent être utilisées. Par ailleurs, on peut également envisager d'utiliser des valeurs statistiques de $k_m$ qui ont été acquises par apprentissage. Mais, dans une variante on peut utiliser une formule plus générale, comme par

exemple: $K_{j'i} \leq \sum_{m(j,i)} k_m$ .

On notera également que dans la seconde étape (b), lorsque chaque équipement de communication Ej met en oeuvre un algorithme de gestion de flux de paquets au niveau de chacune de ses interfaces de communication $I_{ji}$, on peut effectuer chaque sélection de chemin de communication $C_m$ dans le second équipement Ej (ici E2) parmi les chemins de communication $C_m$ qui existent entre l'une de ses interfaces $I_{2i}$ (qui sont capables, à l'instant considéré, d'offrir une bande passante utilisable en émission supérieure à la bande passante des paquets de la session de communication devant être transmis de E2 vers E1) et l'interface $I_{j'j}$ (ici $I_{1i}$) qui a été sélectionnée lors de la première étape (a) pour le premier équipement Ej' (ici E1). Cette solution est plus particulièrement adaptée au cas où les paquets à transmettre arrivent de façon régulière dans le second équipement E2. Dans ce cas, l'algorithme de gestion de flux de paquets qui est mis en oeuvre peut être celui qui est appelé "leaky bucket" en anglais.

Une variante de fonctionnement doit être préférentiellement envisagée lorsque les paquets à transmettre arrivent sous forme de rafales (ou "bursts") dans le second équipement E2. Dans ce cas, l'algorithme de gestion de flux de paquets qui est mis en oeuvre peut être celui qui est appelé "tocken bucket" en anglais. Par ailleurs, dans ce cas, on peut effectuer dans la seconde étape (b) chaque sélection de chemin de communication $C_m$ pour le second équipement Ej (ici E2) parmi les chemins de communication $C_m$ qui existent entre l'une de ses interfaces $I_{2i}$ (qui sont capables, à l'instant considéré, d'une part, d'offrir une bande passante utilisable en émission qui est égale à la bande passante des paquets de la session de communication devant être transmis de E2 vers E1 moins une bande passante excédentaire, et, d'autre part, de transmettre les paquets qui correspondent à cette bande passante excédentaire dans un délai qui est inférieur à un seuil choisi) et l'interface $I_{j'i}$ (ici $I_{1i}$) qui a été sélectionnée lors de la première étape (a) pour le premier équipement Ej' (ici E1). Le seuil peut, par exemple, être choisi par l'application qui veut transmettre des paquets. Mais, il peut être également prédéfini.

Si l'on considère que le seuil choisi est un délai maximum acceptable DM et qu'à l'instant considéré aucun paquet n'est en attente de transmission dans le second équipement E2 ou en cours de transmission entre le second équipement E2 et le premier équipement E1 sur un chemin de communication $C_m$ donné, alors le

nombre maximum de paquets d'une rafale $\text{burst}_m$ que ce chemin de communication $C_m$ peut absorber peut être donné par la troisième équation : $\text{burst}_m = (DM - \text{minRTT}_m/2) * \min(B_m, k_m)$, si l'on considère que le temps $R_m$ est donné par la seconde équation présentée plus haut $[R_m = \text{minRTT}_m/2 + (O_m + S_m + D) / \min(B_m, k_m)]$. Par conséquent, le nombre maximum de paquets d'une rafale $\text{Burst}_{ji}$ qu'une interface $I_{ji}$ peut recevoir à un instant donné peut être donné par la quatrième équation :

$$\sum_{m(i\,i)} \text{burst}_m = (DM - \text{minRTT}_m/2) * \min(B_m, k_m).$$

Ce nombre $\text{Burst}_{ji}$ peut être utilisé pour définir la capacité de paquets que l'on peut associer à chaque jeton (ou "token") dans l'algorithme de gestion de flux de paquets de type tocken bucket.

Lorsque l'on choisit des valeurs élevées pour le paramètre $K_m$ pour des chemins de communication $C_m$ ayant un petit $RTT_m$ (ce qui correspond à un partage de la bande passante maximale d'une interface $I_{ji}$), cela permet d'offrir une capacité maximale d'absorption de rafales. Plus on peut absorber de rafales, moins l'on est obligé d'utiliser des chemins de communication associés à de faibles niveaux de priorité d'utilisation.

On notera que le second procédé peut être mis en oeuvre au moyen de seconds dispositifs (de détermination de chemin(s) de communication) $D2_j$ qui sont associés respectivement aux équipements Ej. Par exemple, et comme illustré non limitativement, chaque second dispositif $D2_j$ peut comporter des premiers moyens de sélection MS1 chargés de mettre en oeuvre la première étape (a) et des seconds moyens de sélection MS2 chargés de mettre en oeuvre la seconde étape (b).

On entend ici par "associé" aussi bien le fait de faire partie intégrante d'un équipement Ej (comme illustré), que le fait d'être couplé directement ou indirectement à un équipement Ej. Par conséquent, un second dispositif (de détermination de chemin(s) de communication) $D2_j$ peut être réalisé sous la forme de modules logiciels (ou informatiques), ou bien de circuits électroniques, ou encore d'une combinaison de circuits électroniques et de modules logiciels.

L'invention ne se limite pas aux modes de réalisation de procédé de transmission d'informations, de procédé de détermination de chemin(s) de communication de paquets, de dispositif de génération de messages de contrôle, de dispositif de détermination de chemin(s) de communication de paquets, et d'équipements de communication, décrits ci-avant, seulement à titre d'exemple, mais elle englobe toutes les variantes que pourra envisager l'homme de l'art dans le cadre des revendications ci-après.

**Revendications**

1. Procédé de transmission d'informations entre deux équipements de communication (Ej) dans le cadre d'une session de communication exploitant au moins deux chemins de communication, l'un desdits équipements (Ej) ayant au moins deux interfaces de communication ($I_{ji}$) disposant d'adresses de communication différentes, et l'autre (Ej') ayant au moins une interface de communication ($I_{j'i}$) disposant d'une adresse de communication, **caractérisé en ce qu'**il comprend une étape (i) consistant à générer dans l'un au moins desdits équipements de communication (Ej) un message de contrôle contenant chaque adresse de communication de chacune de ses interfaces de communication ($I_{ij}$) associée à des première et seconde informations représentatives respectivement d'un niveau de priorité d'utilisation et d'une bande passante maximale autorisée en réception ($K_{ji}$), et une étape (ii) consistant à transmettre ledit message de contrôle à l'autre desdits équipements de communication (Ej') afin qu'il détermine au moins un chemin de communication pour transmettre des paquets de ladite session de communication entre l'une de ses interfaces de communication ($I_{j'i}$) et l'une des interfaces de communication ($I_{ji}$) dudit équipement de communication (Ej) ayant transmis ledit message de contrôle.

2. Procédé selon la revendication 1, **caractérisé en ce que** chaque message de contrôle est conforme au protocole de transport SCTP.

3. Procédé de détermination de chemin(s) de communication pour des paquets d'une session de communication exploitant au moins deux chemins de communication établis entre deux équipements de communication (Ej), l'un de ces équipements (Ej') ayant au moins deux interfaces de communication ($I_{j'i}$) disposant d'adresses de communication différentes, et l'autre (Ej) ayant au moins une interface de communication ($I_{ji}$) disposant d'une adresse de communication, **caractérisé en ce qu'**il comprend une étape (a) consistant à sélectionner l'une des interfaces de communication ($I_{j'i}$) d'un premier desdits équipements de communication (Ej') en fonction de niveaux de priorité d'utilisation qui leur sont associés, et une étape (b) consistant à sélectionner, pour transmettre des paquets de ladite session de communication, au moins l'un des chemins de communication existants entre l'une des interfaces de communication ($I_{ji}$) d'un second desdits équipements de communication (Ej) et ladite interface de communication ($I_{j'i}$) sélectionnée dudit premier équipement de communication (Ej'), en fonction d'une bande passante maximale autorisée en réception ($K_{j'i}$) pour cette dernière interface ($I_{j'i}$) et de temps de transmission de paquets sur lesdits chemins de communication existants.

4. Procédé selon la revendication 3, **caractérisé en ce qu'**à l'étape (a) on effectue ladite sélection parmi les interfaces de communication ($I_{j'i}$) dudit premier équipement de communication ($Ej'$) qui sont associées à une bande passante maximale autorisée en réception ($K_{j'i}$) supérieure à la bande passante des paquets à transmettre de ladite session de communication.

5. Procédé selon l'une des revendications 3 et 4, **caractérisé en ce que**, lorsque la bande passante utilisable sur ledit chemin de communication sélectionné est strictement inférieure à ladite bande passante maximale autorisée en réception pour ladite interface de communication ($I_{j'i}$) sélectionnée dudit premier équipement de communication ($Ej'$), on sélectionne au moins un autre des chemins de communication existants entre l'une desdites interfaces de communication ($I_{ji}$) dudit second équipement de communication ($Ej$) et ladite interface de communication ($I_{j'i}$) sélectionnée dudit premier équipement de communication ($Ej'$), en fonction desdits temps de transmission de paquets sur lesdits chemins de communication existants, de sorte que des paquets de ladite session de communication soient transmis de façon répartie sur chaque chemin de communication sélectionné.

6. Procédé selon l'une des revendications 3 à 5, **caractérisé en ce que** chaque temps de transmission de paquets sur un chemin de communication existant est déterminé en fonction de l'équation suivante: $R_m = (O_m + D) / min(B_m, k_m)$, où $O_m$ est le nombre de paquets qui sont en cours de transmission sur ledit chemin de communication existant considéré, $D$ est le nombre de paquets devant être transmis, $B_m$ est une estimée de la capacité de transmission en cours sur ledit chemin de communication existant considéré, et $k_m$ est une bande passante maximale autorisée en réception dans ladite interface de communication ($I_{j'i}$) sélectionnée dudit premier équipement de communication ($Ej'$) pour ledit chemin de communication existant considéré.

7. Procédé selon l'une des revendications 3 à 5, **caractérisé en ce que** chaque temps de transmission de paquets sur un chemin de communication existant est déterminé en fonction de l'équation suivante: $R_m = minRTT_m/2 + (O_m + S_m + D) / min(B_m, k_m)$, où $minRTT_m$ est le plus petit temps aller/retour observé sur ledit chemin de communication existant ($C_m$) considéré, $O_m$ est le nombre de paquets qui sont en cours de transmission sur ledit chemin de communication existant considéré, $S_m$ est le nombre de paquets en attente de transmission sur ledit chemin de communication existant considéré, $D$ est le nombre de paquets devant être transmis, $B_m$ est une estimée de la capacité de transmission en cours sur ledit chemin de communication existant considéré, et $k_m$ est une bande passante maximale autorisée en réception dans ladite interface de communication ($I_{j'i}$) sélectionnée dudit premier équipement de communication ($Ej'$) pour ledit chemin de communication existant considéré.

8. Procédé selon l'une des revendications 6 et 7, **caractérisé en ce que** chaque paramètre $k_m$ est donné par la formule suivante : $k_m = K_{j'i} / N_{j'i}$, où $N_{j'i}$ est le nombre de chemins de communication existants arrivant dans ladite interface de communication ($I_{j'i}$) sélectionnée dudit premier équipement de communication ($Ej'$).

9. Procédé selon l'une des revendications 3 à 8, **caractérisé en ce que**, lorsque chaque équipement de communication ($Ej$) met en oeuvre un algorithme de gestion de flux de paquets au niveau de chacune de ses interfaces de communication ($I_{ji}$), on sélectionne à l'étape (b), dans ledit second équipement de communication ($Ej$), au moins l'un des chemins de communication existants entre l'une de ses interfaces de communication ($I_{ji}$), capables, à l'instant considéré, d'offrir une bande passante utilisable en émission supérieure à la bande passante des paquets à transmettre de ladite session de communication, et ladite interface de communication ($I_{j'i}$) sélectionnée dudit premier équipement de communication ($Ej'$).

10. Procédé selon l'une des revendications 3 à 8, **caractérisé en ce que**, lorsque chaque équipement de communication ($Ej$) met en oeuvre un algorithme de gestion de flux de paquets au niveau de chacune de ses interfaces de communication ($I_{ji}$), on sélectionne à l'étape (b), dans ledit second équipement de communication ($Ej$), au moins l'un des chemins de communication existants entre l'une de ses interfaces de communication ($I_{ji}$), capables, à l'instant considéré, d'une part, d'offrir une bande passante utilisable en émission qui est égale à la bande passante des paquets à transmettre de ladite session de communication moins une bande passante excédentaire, et, d'autre part, de transmettre les paquets correspondant à ladite bande passante excédentaire dans un délai inférieur à un seuil choisi, et ladite interface de communication ($I_{j'i}$) sélectionnée dudit premier équipement de communication ($Ej'$).

11. Dispositif ($D1_j$) de génération de messages de contrôle pour une session de communication exploitant au moins deux chemins de communication établis entre deux équipements de communication ($Ej$), l'un desdits équipements ($Ej$) ayant au moins deux interfaces de communication ($I_{ji}$) disposant d'adresses de communication différentes, et l'autre ($Ej'$) ayant au moins une interface de communication ($I_{j'i}$) disposant d'une adresse de communication, **caractérisé en ce qu'**il est agencé pour générer pour l'un desdits équipements de communication (Ej) un message de contrôle contenant chaque adresse de communication de chacune de ses interfaces de communication ($I_{ij}$) associée à des première et seconde informations représentatives respectivement d'un niveau de priorité d'utilisation et d'une bande passante maximale autorisée en réception ($K_{ji}$).

**12.** Dispositif selon la revendication 11, **caractérisé en ce qu'**il est agencé pour générer des messages de contrôle conformes au protocole de transport SCTP.

**13.** Dispositif ($D2_j$) de détermination de chemin(s) de communication pour des paquets d'une session de communication exploitant au moins deux chemins de communication établis entre deux équipements de communication (Ej), l'un de ces équipements (Ej') ayant au moins deux interfaces de communication ($I_{j'i}$) disposant d'adresses de communication différentes, et l'autre (Ej) ayant au moins une interface de communication ($I_{ji}$) disposant d'une adresse de communication, **caractérisé en ce qu'**il comprend des premiers moyens de sélection (MS1) agencés pour sélectionner l'une des interfaces de communication ($I_{j'i}$) d'un premier desdits équipements de communication (Ej') en fonction de niveaux de priorité d'utilisation qui leurs sont associés, et des seconds moyens de sélection (MS2) agencés pour sélectionner, en vue de la transmission de paquets de ladite session de communication, au moins l'un des chemins de communication existants entre l'une des interfaces de communication ($I_{ji}$) d'un second desdits équipements de communication (Ej) et ladite interface de communication ($I_{j'i}$) sélectionnée dudit premier équipement de communication (Ej'), en fonction d'une bande passante maximale autorisée en réception ($K_{j'i}$) pour cette dernière interface ($I_{j'i}$) et de temps de transmission de paquets sur lesdits chemins de communication existants.

**14.** Equipement de communication (Ej) comprenant au moins une interface de communication ($I_{ji}$) disposant d'une adresse de communication, **caractérisé en ce qu'**il comprend un dispositif de génération de messages de contrôle ($D1_j$) selon l'une des revendications 11 et 12 et/ou un dispositif de détermination de chemin(s) de communication ($D2_j$) selon la revendication 13.

Figure unique

Europäisches
Patentamt

European
Patent Office

Office européen
des brevets

**RAPPORT DE RECHERCHE EUROPEENNE**

Numéro de la demande

EP 10 30 6267

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2008/310419 A1 (BANSAL DEEPAK [US] ET AL) 18 décembre 2008 (2008-12-18) * alinéa [0006] - alinéa [0007] * * alinéa [0015] - alinéa [0017] * * alinéa [0015] - alinéa [0028] * * alinéa [0036] - alinéa [0038] * * figure 1 * | 1-14 | INV. H04L12/56 |
| Y | US 2004/077341 A1 (CHANDRANMENON GIRISH P [US] ET AL) 22 avril 2004 (2004-04-22) * alinéa [0055] - alinéa [0057] * | 1-3,6-8, 11-14 | |
| Y | US 7 583 677 B1 (MA QINGMING [US] ET AL) 1 septembre 2009 (2009-09-01) * colonne 1, ligne 40 - colonne 2, ligne 45 * | 1-5,9-14 | |
| Y | YLITALO J ET AL: "Dynamic network interface selection in multihomed mobile hosts", SYSTEM SCIENCES, 2003. PROCEEDINGS OF THE 36TH ANNUAL HAWAII INTERNATI ONAL CONFERENCE ON 6-9 JAN. 2003, PISCATAWAY, NJ, USA,IEEE, 6 janvier 2003 (2003-01-06), pages 315-324, XP010626772, ISBN: 978-0-7695-1874-9 | 2 | |
| A | * le document en entier * | 1,3-14 | |

DOMAINES TECHNIQUES
RECHERCHES (IPC)

H04L

Le présent rapport a été établi pour toutes les revendications

| Lieu de la recherche | Date d'achèvement de la recherche | Examinateur |
|---|---|---|
| La Haye | 8 février 2011 | Clemente Lafuente, G |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 10 30 6267

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-02-2011

| Document brevet cité au rapport de recherche | | Date de publication | Membre(s) de la famille de brevet(s) | | Date de publication |
|---|---|---|---|---|---|
| US 2008310419 | A1 | 18-12-2008 | CN<br>EP<br>WO | 101682549 A<br>2165465 A1<br>2008157036 A1 | 24-03-2010<br>24-03-2010<br>24-12-2008 |
| US 2004077341 | A1 | 22-04-2004 | US | 2010023763 A1 | 28-01-2010 |
| US 7583677 | B1 | 01-09-2009 | AUCUN | | |

EPO FORM P0460